# EUROPÄISCHE PATENTSCHRIFT

(11) **EP 1 064 177 B1**
(45) Veröffentlichungstag und Bekanntmachung des Hinweises auf die Patenterteilung: **04.06.2003**
(21) Anmeldenummer: 99917793.4
(22) Anmeldetag: 19.03.1999
(51) Int. Cl.: B60R 25/04

(54) **START-/FAHRBERECHTIGUNGSSYSTEMEN FÜR EIN FAHRZEUG**
STARTUP/DRIVE AUTHORISATION SYSTEM FOR A VEHICLE
SYSTEME D'AUTORISATION DE DEMARRAGE/ROULEMENT POUR UN VEHICULE

(30) Priorität: 25.03.1998 DE 19813068
(43) Veröffentlichungstag der Anmeldung: 03.01.2001
(73) Patentinhaber: ROBERT BOSCH GMBH, 70442 Stuttgart (DE)
(72) Erfinder: HAULER, Peter, D-76275 Ettlingen (DE); WEISS, Karl-Ernst, D-76275 Ettlingen (DE); SCHROFF, Clemens, D-76698 Ubstadt-Weiher (DE); SCHMITZ, Stephan, D-70197 Stuttgart (DE); HUGEL, Robert, D-76199 Karlsruhe (DE); KLAIBER, Tobias, D-71665 Vaihingen (DE); SCHOENAMSGRUBER, Werner, D-71701 Schwieberdingen (DE)
(86) Internationale Anmeldenummer: DE9900786
(87) Internationale Veröffentlichungsnummer: WO99048722

(56) Entgegenhaltungen:
- EP-A- 0 767 092
- EP-A- 0 794 095
- WO-A-96/28628
- DE-A- 4 329 697
- DE-A- 4 424 879
- DE-A- 19 519 420
- US-A- 5 024 186

## Beschreibung

### Stand der Technik

Die Erfindung betrifft ein Start-/Fahrberechtigungssystem für ein Fahrzeug, bei dem ein Steuergerät im Fahrzeug mit einem tragbaren Transponder in einem Frage-Antwort-Dialog durch Austausch von Identifizierungskennzeichen den Zugang zum Fahrzeug und die Berechtigung zum Starten und Fahren des Fahrzeugs überprüft und freigibt oder sperrt, wobei für die Freigabe der Start-/Fahrberechtigung vom Fahrer auslösbare Schaltvorgänge, zusätzliche Schalt- und/oder Betriebszustände überwachter Fahrzeugkomponenten und ein weiterer Frage-Antwort-Dialog vorausgesetzt sind und wobei nach Freigabe des Zugangs mit dem weiteren, im Inneren des Fahrzeuges veranlassten Frage-Antwort-Dialog startvorbereitende Vorgänge automatisch einleitbar sind.

Ein derartiges Start-/Fahrberechtigungssystem ist in der Gattungsbildenden EP 0 794 095 A1 angegeben. Es soll den Diebstahlschutz bei einem Fahrzeug erhöhen, wobei weitere Maßnahmen erforderlich sind, die den Start und das Fahren des Fahrzeuges freigeben. Bei diesem bekannten Start-/Fahrberechtigungssystem ist sowohl eine Abfrage für die Zugangsberechtigung als auch für die Start- und Fahrberechtigung vorgesehen, wobei letztere durch eine vom Fahrer ausgelöste Startbetätigung eingeleitet wird.

Ein weiteres Start-/Fahrberechtigungssystem ist aus der WO-A 96-28628 bekannt. Dabei findet der weitere Frage-Antwort-Dialog, der vom Steuergerät im Fahrzeug veranlasst wird, nur statt, wenn das Bremspedal betätigt ist und der Fahrer auf dem Fahrersitz Platz genommen hat. Mit dem zweiten Frage-Antwort-Dialog wird dann das Starten und Fahren des Fahrzeuges freigegeben, wozu der Fahrer die erforderlichen Schaltmaßnahmen durchführen muss.

Wie die EP-A 0 767 092 zeigt, ist es auch bekannt, in einem Start-/Fahrberechtigungssystem das Anlegen des Sicherheitsgurtes zu überwachen und das Starten und Fahren des Fahrzeuges nur freizugeben, wenn ein am Sicherheitsgurt vorgesehener Schalter betätigt ist.

Die Freigabe des Startens und Fahrens eines Fahrzeuges kann auch von Betriebszuständen, wie der Leerlaufstellung des Getriebes, abhängig sein, wie die DE-A 43 29 697 zeigt.

Um die Vorsätzlichkeit des Startens anzuzeigen, kann vor der Startphase auch das Betätigen des Bremspedals als Voraussetzung eingeführt sein, wie die DE-A 44 24 879 zeigt.

Aus Sicherheitsgründen werden immer mehr Sperren in einem Fahrzeug vorgesehen, um im Stillstand zugeordnete Funktionen, die zum Starten und Fahren des Fahrzeugs erforderlich sind, zu blockieren. Es sei nur auf die Sperrung der Lenksäule, der Kraftübertragung und des Getriebes hingewiesen, die vor dem Starten bzw. dem Fahren gelöst werden müssen. Diese Sperren erschweren bei den bekannten Start-/Fahrberechtigungssystemen die Bedienung erheblich.

Es ist Aufgabe der Erfindung, ein Start-/Fahrberechtigungssystem der eingangs erwähnten Art weiter zu verbessern.

Diese Aufgabe wird nach der Erfindung dadurch gelöst, dass ohne Durchführung oder nach Erfolglosigkeit des Starterbetriebes die Bordnetzspannung (z.B. Kl. 15) ganz oder teilweise eingeschaltet bleibt und durch Entfernen des Transponders aus dem Kommunikationsbereich der Start-/Fahrberechtigung bis auf vorgeschriebene Sicherheitsanlagenversorgungen (z.B. Warnblinker, Standlicht usw.) abgeschaltet wird.

Mit dieser Ausgestaltung werden nicht schon bei Freigabe des Zugangs durch die Zugangskontrolle startvorbereitende Vorgänge wie etwa das Vorglühen oder das Entriegeln des Lenkrad-/Lenksäulen- oder Getriebeschlosses eingeleitet, sondern erst durch eine zweite Berechtigungsprüfung im Inneren des Fahrzeugs. Hauptsächlich sogenannte "Handsfree ignition"-Fahrberechtigungssysteme, bei denen das Vorhandensein eines zugelassenen Transponders an einem vorgegebenen Ort im Fahrzeuginneren zum Nachweis der Berechtigung ausreicht, also kein Transponder in eine definierte Aufnahmevorrichtung eingebracht werden muß, werden somit in Einklang mit geltenden Zulassungsvorschriften gebracht.

Die Berechtigungsprüfung kann in komfortabler Weise dadurch eingeleitet werden, daß durch beispielsweise einen Sitzbelegungsschalter mit einer von einem Mindestgewicht abhängigen Auslösung oder durch andere, hier nicht näher dargestellte Einrichtungen erkannt wird, daß sich eine Person auf dem Fahrerplatz befindet. Erst infolge des Übergangs vom unbelasteten zum belasteten bzw. vom unbesetzten zum besetzten Fahrersitz erfolgt nach einer zweiten Berechtigungsprüfung das Auslösen startvorbereitender Abläufe, etwa das Vorglühen und das Entriegeln der Lenk- oder Getriebesperre, bevor also der Fahrer den Startvorgang manuell initiieren kann. Eine besondere Auslösehandlung etwa durch Einbringen des Transponders in eine Aufnahmevorrichtung ist somit nicht notwendig.

Der tatsächliche Startvorgang, d.h. das Bestromen des Starters, muß wenigstens in manchen Ländern aus rechtlichen Gründen allerdings willentlich vom Fahrer ausgelöst werden. Da bei den "Handsfree Ignition"-Systemen der Vorgang des Einbringens des Transponders in einen Leser als Indikator entfällt, bietet sich ein Startschalter beliebiger, aber zweckgerechter Ausführung an. Fehlt eine derartige Vorschrift, können alle notwendigen Vorgänge zum Starten des Fahrzeugmotors auch ohne eine solche manuelle Auslösung im Anschluß an die Identifikation bei Vorliegen der sicherheitsrelevanten Informationen, wie sie im folgenden Absatz beschrieben sind, ablaufen.

Um insbesondere bei den "Handsfree Ignition"-Systemen ein Startauslösen durch Unberechtigte, beispielsweise Kinder auf dem Beifahrersitz, zu verhindern, wenn sich gleichzeitig ein Transponder am vorgegebenen Ort des Fahrzeuginneren, etwa in einer Handtasche auf dem Fahrersitz, befindet, sind bei Dieselmotoren spätestens nach Ende des Vorglühens, bei Benzinmotoren sofort weitere Signale notwendig, aus denen ermittelt werden kann, daß sich tatsächlich eine lebende Person und nicht nur ein Gegenstand mit ausreichendem Gewicht auf dem Fahrersitz befindet. Solche Signale sind zweckmäßigerweise vor allem die dynamische Betätigung kraftschlußtrennender oder fahrthemmender Einrichtungen (Kupplungs-, Bremspedal und dgl.), aber auch statische Aussagen, beispielsweise Leerlauf- bzw. Parkstellung des Getriebes, angezogene Feststellbremse oder auch ein eingerastetes Gurtschloß. Vorteilhafterweise werden dynamische Vorgänge einbezogen zur Erkennung auch des Willens zur Inbetriebnahme des Motors; es handelt sich dabei um Betätigungen, deren Ablauf zu einem bestimmten Zeitpunkt gefordert wird. Somit soll verhindert werden, daß beispielsweise klemmende Pedalschalter eine notwendige, aber falsche Information liefern.

Weiterhin muß vor Starten des Motors die Sperre des Lenkrads bzw. der Lenksäule des Getriebes oder der Kraftübertragung gelöst sein, weshalb deren Zustand ebenfalls erfaßt wird.

Werden diese Signale zu den vom System geforderten Zeitpunkten erkannt, wird der Starter ohne erneute Handlung des Fahrers, beispielsweise einer wiederholten Startschalterbetätigung, bestromt und alle zum Motor- und Fahrzeugbetrieb notwendigen Spannungen bereitgestellt.

Es kann in vorteilhafter Weise bei Dieselmotoren der Startvorgang so ausgelegt werden, daß nicht während der gesamten unterschiedlich langen Vorglühphase das Kupplungs- oder Bremspedal getreten gehalten werden muß, sondern erst innerhalb einer vorgegebenen Zeit nach Ende des Vorglühvorgangs, der i.a. optisch angezeigt wird (Kontrolleuchte im Instrumentenbrett). Ebenso kann dem Fahrer eine andere Information, z.B. akustisch, gegeben werden, die ihm die noch mögliche Startzeit oder deren Ablauf oder Anweisungen angibt.

Nach Ablauf dieser Zeit kann je nach Systemgestaltung und Anforderungen des Fahrzeugherstellers lediglich derjenige Stromkreis des Fahrzeugs geschlossen bleiben, der bei stehendem Fahrzeug benötigt wird, z.B. für Radio, Uhr, Zentralverriegelung usw. Ein erneuter Vorglüh- und Startvorgang erfordert dann eine ebenso erneute Startschalterbetätigung oder, wo zulässig, andere Indikatorbetätigungen (z.B. Brems- oder Kupplungspedalbetätigung). Dies verhindert unnötigen Ruhestrom.

Zweckmäßigerweise ist mit dem erneuten Einleiten des Startvorgangs nach einer der oben beschriebenen Methoden auch jedesmal eine neue Abfrage auf Vorhandensein eines zugelassenen Transponders und dessen Identifikation verbunden. Dies kann zur weiteren Erhöhung der Sicherheit auch bei jedem Anfahren erfolgen.

Bei den Startschaltern ist eine Mindestbetätigungsdauer und eine Mindeststellkraft zur Vermeidung unbeabsichtigter oder zufälliger Auslösung empfehlenswert, ebenso eine geeignete Anbringung.

Zur Vermeidung unterschiedlicher Bedienelemente und damit -vorgänge kann der Startschalter auch zum Abschalten des Motors benutzt werden. Seine momentane Wirkung kann dabei in Abhängigkeit der Motordrehzahl umgeschaltet werden, etwa bei Motordrehzahl niedriger als Leerlaufdrehzahl→ Startfunktion, Drehzahl höher oder gleich Leerlauf → Abschalfunktion.

Andere Möglichkeiten zum Abschalten des Fahrzeugmotors sind neben dem manuellen Abschalten auch automatische Verfahren; so kann beispielsweise der Motor bei Erreichen der Leerlaufdrehzahl und der Geschwindigkeit O km/h dann abgeschaltet werden, wenn die Kupplung ein- oder mehrmals hintereinander ohne eingelegten Gang betätigt wird, grundsätzlich kein Transponder sich im Fahrzeuginneren befindet oder bei Automatikgetriebe die P-Stellung eingelegt wird.

Die Erfindung wird anhand eines als Blockschaltbild dargestellten Ausführungsbeispiels näher erläutert.

Das Blockschaltbild zeigt im Prinzip ein Start- und Fahrberechtigungssystem mittels eines Transponders TP mit Sendeteil St und Empfangsteil Et, der über einen drahtlosen Kommunikationskanal KK mit einem Sender Sf und einem Empfänger Ef, beide im Fahrzeug angeordnet, kommunizieren kann. Dieser Kommunikationskanal KK dient je nach System neben der Übertragung der zur Überprüfung der Transponder-Identität erforderlichen Nachrichten gegebenenfalls auch zur Übertragung von Energie vom Fahrzeug zum Transponder. Relevante Informationen werden dem Fahrer über eine Anzeigeeinheit IG mitgeteilt; Sperrelemente SE der Lenksäule oder anderer, zur Sperrung als Schutz gegen unbefugte Benutzung zugelassener Fahrzeugteile sind als Block dargestellt.

Zur Abfrage wird zur Erhöhung der Sicherheit in vorteilhafter Weise ein Frage-Antwort-Dialog verwendet, der sich bei jeder Abfrage nicht vorhersagbar ändert. Wird ein derartiger Dialog auch für die Zugangskontrolle verwendet und wird vor Betätigen des Startschalters eine zweite Sicherheitsabfrage gefordert, können beide Dialoge zum Schutz gegen Entschlüsselung auch verschiedene Identifizierungsmerkmale aufweisen.

Denkbar ist, daß die Kontrollabfrage der Start- und Fahrberechtigung unabhängig vom Zugangssystem gesteuert wird, etwa mittels des Sitzschalters im Fahrersitz FaS oder anderen, hier nicht dargestellten geeigneten Einrichtungen. Es kann bei erneutem Einleiten des Startvorgangs durch Betätigen des Startschalters SS oder einer anderen dafür vorgesehenen Einrichtung eine erneute Identifizierung durchgeführt werden. Dies verhindert, daß Nichtauthorisierte den Motorstart einleiten können.

Die Freigabe des Startvorgangs selbst erfolgt dann, wenn der Startschalter SS betätigt wurde und neben der erfolgreichen vorhergegangenen Identifizierung die den Sicherheitsansprüchen genügenden Betätigungen bzw. Zustände von beispielsweise des Bremspedals BrP, des Sicherheitsgurtschlosses SiG sowie des Getriebes GeT sowie natürlich des Sitzschalters im Fahrersitz FaS, aber auch von Sperrelementen SE vorliegen. Die diese Informationen sammelnde und auswertende Überwachungseinheit ÜW kann auch Bestandteil des Steuergerätes SG sein, wobei dieses auch mit anderen betriebsrelevanten Ausrüstungsteilen des Fahrzeugs, beispielsweise der Motorsteuerung MS oder der Getriebesteuerung GS in zweckgemäßer Verbindung steht. Insbesondere Betriebsparameter wie Fahrzeuggeschwindigkeit oder solche des Motors wie z.B. die Drehzahl sind wichtige Informationen zur automatischen Steuerung des Start-, aber auch des Abschaltvorgangs.

Eine zwingende Vorbedingung ist, daß vor Freigabe der unmittelbar ein Anspringen des Motors zur Folge habenden Vorgänge, beispielsweise das Bestromen des Starters, ein vorgeschriebenes Sperrelement SE zum Schutz des Fahrzeugs gegen unerlaubte Benutzung wie z.B. ein Lenkradschloß entriegelt wurde.

Sind alle Vorbedingungen erfüllt, läuft der manuell ausgelöste Teil der Startprozedur bis zum Anspringen des Motors selbsttätig ab. Fehlen eine oder sogar mehrere der Vorbedingungen, können weder der Starter noch das Motorsteuergerät MS ihren Betrieb aufnehmen.

Zum Schutz des Starters wird seine Bestromungszeit begrenzt. Dies kann entweder in der Motorsteuerung MS selbst oder durch eine hier nicht dargestellte besondere Funktionseinheit innerhalb oder außerhalb des Steuergeräts SG durch Überwachung der Motordrehzahl oder durch Vorgabe einer Maximalzeit erfolgen.

Die Anzeigeeinheit IG zeigt dem Fahrer relevante Systemzustände, etwa das Vorglühen bei Dieselmotoren, optisch, akustisch oder in anderer Art und Weise an.

Die Erfindung ist nicht auf die aufgeführten Zusatzbedingungen für die Start/Fahrfreigabe und den automatischen Start beschränkt. Es lassen sich in die Freigabe auch weitere Voraussetzungen bzw. Betriebszustände von Fahrzeugkomponenten, Schaltmaßnahmen und Daten des Transponders einbeziehen, um die Sicherheit zu erhöhen.

Anstelle eines transpondergestützten Identifizierungssystems kann die Identifizierung des Fahrers auch biometrisch, beispielsweise durch Überprüfung eines oder mehrerer Fingerabdrücke, der Stimme, der Iris, des Gesichtsprofils usw. erfolgen. Insbesondere bei Systemen mit Fingerabdruck- oder Handprofilerkennung läßt sich die Startprozedur sehr einfach und komfortabel gestalten, da die Erfassung des Fingerabdrucks oder des Handprofils gleichzeitig mit der Bedienung des den Startvorgang auslösenden Bedienelements erfolgen kann, wenn dieses Element entsprechende Einrichtungen enthält. Bei Systemen mit Sprachsteuerung und Sprecheridentifizierung läßt sich der Startwunsch auch mittels gesprochenem Befehl ausdrücken. Durch geeignete Anordnung der Mikrofone kann gleichzeitig festgestellt werden, ob sich der Sprecher auf dem Fahrersitz befindet, sofern die Mikrofoneigenschaften entsprechend ausgewählt wurden.

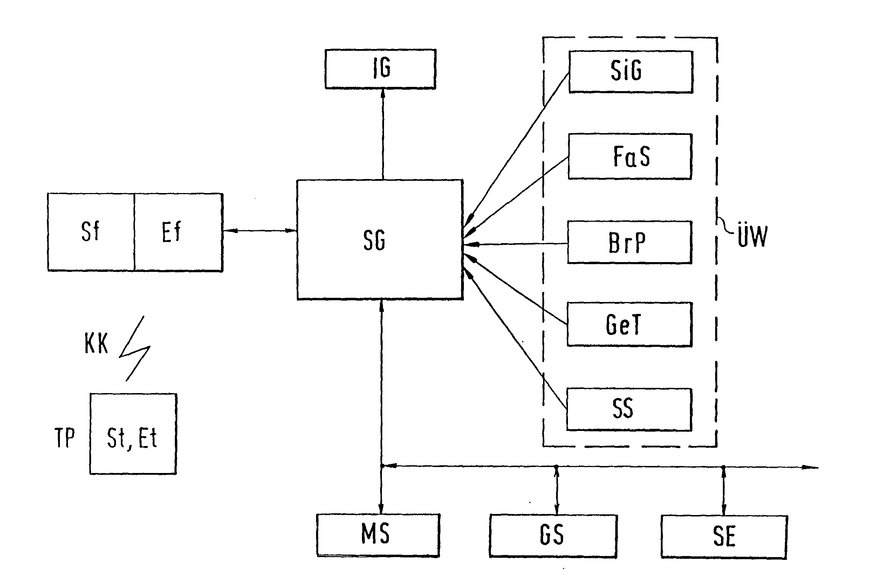

## Patentansprüche

1. Start-/Fahrberechtigungssystem für ein Fahrzeug, bei dem ein Steuergerät (SG) im Fahrzeug mit einem tragbaren Transponder (TP) in einem Frage-Antwort-Dialog durch Austausch von Identifizierungskennzeichen den Zugang zum Fahrzeug und die Berechtigung zum Starten und Fahren des Fahrzeugs überprüft und freigibt oder sperrt, wobei für die Freigabe der Start-/Fahrberechtigung vom Fahrer auslösbare Schaltvorgänge, zusätzliche Schalt- und/oder Betriebszustände überwachter Fahrzeugkomponenten und ein weiterer Frage-Antwort-Dialog vorausgesetzt sind und wobei nach Freigabe des Zugangs mit dem weiteren, im Inneren des Fahrzeuges veranlassten Frage-Antwort-Dialog startvorbereitende Vorgänge automatisch einleitbar sind,
**dadurch gekennzeichnet,**
**dass** ohne Durchführung oder nach Erfolglosigkeit des Starterbetriebes die Bordnetzspannung ganz oder teilweise eingeschaltet bleibt und durch Entfernen des Transponders aus dem Kommunikationsbereich der Start-/Fahrberechtigung bis auf vorgeschriebene Sicherheitsanlagenversorgungen abgeschaltet wird.

2. Start-/Fahrberechtigungssystem nach Anspruch 1,
**dadurch gekennzeichnet,**
**dass** als vom Fahrer vorgebbarer Schalt- und/oder Betriebszustand das Sitzen des Fahrers auf dem Fahrersitz (FaS) überwacht ist.

3. Start-/Fahrberechtigungssystem nach Anspruch 1 oder 2,
**dadurch gekennzeichnet,**
**dass** als vom Fahrer vorgebbarer Schalt- und/oder Betriebszustand ein betätigter Schalter des Sicherheitsgurtes (SiG) des Fahrersitzes (FaS) überwacht ist.

4. Start-/Fahrberechtigungssystem nach einem der Anspüche 1 bis 3,
**dadurch gekennzeichnet,**
**dass** als vorgegebener Schalt- und/oder Betriebszustand für die Startphase die Betätigung des Bremspedals (BrP) oder Kupplungspedals überwacht ist.

5. Start-/Fahrberechtigungssystem nach einem der Ansprüche 1 bis 4,
**dadurch gekennzeichnet,**
**dass** als vorgegebener Schalt- und/oder Betriebszustand für die Startphase die Leerlaufstellung des Getriebes (GeT) überwacht ist.

6. Start-/Fahrberechtigungssystem nach einem der Ansprüche 1 bis 5,
**dadurch gekennzeichnet,**
**dass** bei Automatikgetriebe als vorgegebener Schalt- und/oder Betriebszustand für die Startphase die Stellung des Wahlhebels in der P/N-Stellung überwacht ist.

7. Start-/Fahrberechtigungssystem nach einem der Ansprüche 1 bis 6,
**dadurch gekennzeichnet,**
**dass** bei Dieselfahrzeugen als vorgegebener Schalt- und/oder Betriebszustand für die Startphase das Ende der Vorglühzeit überwacht ist.

8. Start-/Fahrberechtigungssystem nach einem der Ansprüche 1 bis 7,
**dadurch gekennzeichnet,**
**dass** vor der Startphase das Bremspedal (BrP) oder Kupplungspedal betätigt wird, um die Vorsätzlichkeit des Startens anzuzeigen.

9. Start-/Fahrberechtigungssystem nach einem der Ansprüche 1 bis 8,
**dadurch gekennzeichnet,**
**dass** vor der Startphase vorgeschriebene Sperren (SE) für Lenkung, Kraftübertragung gegebenenfalls mit Getriebe (GeT) aufgehoben sind.

10. Start-/Fahrberechtigung nach einem der Ansprüche 1 bis 9,
**dadurch gekennzeichnet,**
**dass** der Fahrzeugmotor automatisch nach Entfernen des Transponders aus dem Kommunikationsbereich der Start-/Fahrberechtigung und Erreichen des Fahrzeugstillstands abschaltbar ist.

11. Start-/Fahrberechtigungssystem nach einem der Ansprüche 1 bis 10,
**dadurch gekennzeichnet,**
**dass** zusätzlich die Leerlaufdrehzahl überwacht und in den Abschaltvorgang einbezogen ist.

12. Start-/Fahrberechtigungssystem nach einem der Ansprüche 1 bis 11,
**dadurch gekennzeichnet,**
**dass** ohne Durchführung oder nach Erfolglosigkeit des Startvorganges die Startprozedur einschließlich einer Transponder-ldentifikation durch Betätigen des Bremspedals (BrP) oder Kupplungspedals oder beider wiederholbar ist.

13. Start-/Fahrberechtigungssystem nach einem der Ansprüche 1 bis 12,
**dadurch gekennzeichnet,**
**dass** vor der Startphase vorgeschriebene Sperren (SE) für Lenkung und/ oder Kraftübertragung mit ggf. vorhandenem Getriebe aufhebbar sind.

14. Start-/Fahrberechtigungssystem nach einem der Ansprüche 1 bis 13,
**dadurch gekennzeichnet,**
**dass** der Fahrer bei Nichterfüllen einer der Vorbedingungen für die Startfreigabe oder falscher Transponder-ldentität über die Fehlerursache informiert wird.

## Claims

1. Start-up/drive authorization system for a vehicle, in which a controller (SG) in the vehicle checks and enables or disables access to the vehicle and the authorization to start and drive the vehicle using a portable transponder (TP) in an enquiry/response dialogue by exchanging identifiers, switching processes which can be triggered by the driver, additional switching and/or operating states of monitored vehicle components and a further enquiry/response dialogue being required for the start-up/drive authorization to be enabled, and it being possible to automatically initiate processes which prepare the start using the further enquiry/response dialogue brought about in the interior of the vehicle, after access has been enabled, **characterized in that**, without carrying out the starter operation, or after it has been unsuccessful, the voltage of the vehicle's electrical system remains switched on entirely or partially and switched off, with the exception of prescribed safety system provisions, by removing the transponder from the communications range of the start-up/drive authorization.

2. Start-up/drive authorization system according to Claim 1, **characterized in that** the fact that the driver is sitting on the driver's seat (FaS) is monitored as a switching and/or operating state which can be predefined by the driver.

3. Start-up/drive authorization system according to Claim 1 or 2, **characterized in that** an activated switch of the seatbelt (SiG) of the driver's seat (FaS) is monitored as a switching and/or operating state which can be predefined by the driver.

4. Start-up/drive authorization system according to one of Claims 1 to 3, **characterized in that** the activation of the brake pedal (BrP) or clutch pedal is monitored as a predefined switching and/or operating state for the starting phase.

5. Start-up/drive authorization system according to one of Claims 1 to 4, **characterized in that** the neutral position of the gearbox (GeT) is monitored as a predefined switching and/or operating state for the starting phase.

6. Start-up/drive authorization system according to one of Claims 1 to 5, **characterized in that**, in the case of an automatic gearbox, the position of the gear shift lever in the P/N position is monitored as a predefined switching and/or operating state.

7. Start-up/drive authorization system according to one of Claims 1 to 6, **characterized in that**, in the case of diesel vehicles, the end of the preheating time is monitored as a predefined switching and/or operating state for the starting phase.

8. Start-up/drive authorization system according to one of Claims 1 to 7, **characterized in that**, before the starting phase, the brake pedal (BrP) or clutch pedal is activated in order to indicate the intention to start.

9. Start-up/drive authorization system according to one of Claims 1 to 8, **characterized in that**, before the starting phase, prescribed disabling means (SE) for the steering, power transmission, if appropriate to the gearbox (GeT) are cancelled.

10. Start-up/drive authorization system according to one of Claims 1 to 9, **characterized in that** the engine of the vehicle can automatically be switched off after the transponder is removed from the communications region of the start-up/drive authorization and after the stationary state of the vehicle is attained.

11. Start-up/drive authorization system according to one of Claims 1 to 10, **characterized in that** the idling speed is additionally monitored and included in the switch-off process.

12. Start-up/drive authorization system according to one of Claims 1 to 11, **characterized in that** the starting procedure, including a transponder identification, can be repeated by activating the brake pedal (BrP) or clutch pedal, or both, without carrying out the starting process, or after the starting process has been unsuccessful.

13. Start-up/drive authorization system according to one of Claims 1 to 12, **characterized in that**, before the starting phase, prescribed disabling means (SE) for the steering and/or power transmission to a gearbox which may possibly be present can be cancelled.

14. Start-up/drive authorization system according to one of Claims 1 to 13, **characterized in that** when one of the preconditions for the enabling of the starting is not fulfilled or there is an incorrect transponder identity the driver is informed of the cause of the fault.

## Revendications

1. Système d'autorisation au démarrage/fonctionnement d'un véhicule selon lequel un appareil de commande (SG) du véhicule effectue un dialogue question-réponse avec un transpondeur portable CTP), par l'échange de caractéristiques d'identification pour vérifier l'accès au véhicule et l'autorisation de démarrer et de conduire le véhicule, et libérer ou bloquer ses fonctions,
la libération de l'autorisation de démarrage/fonctionnement supposant que le conducteur déclenche des opérations de commutation, des états de commutation et/ou de fonctionnement complémentaires de composants du véhicule surveillés et exécute un autre dialogue question-réponse, et
après libération de l'accès, d'autres opérations de préparation du démarrage lancées par le dialogue question-réponse à l'intérieur du véhicule se déroulant automatiquement,
**caractérisé en ce que**
sans exécution ou en cas d'échec du démarrage, la tension du réseau embarqué reste totalement ou partiellement branchée, et est coupée par la séparation du transpondeur de la zone de communication de l'autorisation de démarrage/fonctionnement, à l'exception de l'alimentation des installations de sécurité, prescrites.

2. Système d'autorisation au démarrage/fonctionnement selon la revendication 1,
**caractérisé en ce que**
comme état de commutation et/ou de fonctionnement prédéterminé par le conducteur on surveille la présence du conducteur sur le siège du conducteur (FaS).

3. Système d'autorisation au démarrage/fonctionnement selon la revendication 2,
**caractérisé en ce que**
comme état de commutation et/ou de fonctionnement prédéterminé par le conducteur, on surveille l'actionnement de l'interrupteur de la ceinture de sécurité (SiG) du siège du conducteur (FaS).

4. Système d'autorisation au démarrage/fonctionnement selon l'une des revendications 1 à 3,
**caractérisé en ce que**
comme état de commutation et/ou de fonctionnement prédéterminé on surveille pour la phase de démarrage, l'actionnement de la pédale de frein (BrP) ou de la pédale d'embrayage.

5. Système d'autorisation au démarrage/fonctionnement selon l'une des revendications 1 à 4,
**caractérisé en ce que**
l'état de commutation et/ou de fonctionnement prédéterminé, surveillé pour la phase de démarrage est la position neutre de la boîte de vitesses (GeT).

6. Système d'autorisation au démarrage/fonctionnement selon l'une des revendications 1 à 5,
**caractérisé en ce que**
dans le cas d'une boîte de vitesses automatique, l'état de commutation et/ou de fonctionnement prédéterminé, surveillé par la phase de démarrage vérifie la position du levier sélecteur dans la position P/N.

7. Système d'autorisation au démarrage/fonctionnement selon l'une des revendications 1 à 6,
**caractérisé en ce que**
dans les cas de véhicule diesel, l'état de commutation et/ou de fonctionnement prédéterminé, surveillé pour la phase de démarrage est la fin du préchauffage.

8. Système d'autorisation au démarrage/fonctionnement selon l'une des revendications 1 à 7,
**caractérisé en ce qu'**
avant la phase de démarrage, la pédale de frein (BrP) ou la pédale d'embrayage est actionnée pour indiquer le démarrage.

9. Système d'autorisation au démarrage/fonctionnement selon l'une des revendications 1 à 8,
**caractérisé en ce qu'**
on libère les verrous prescrits (SE) de la direction, la transmission de la force et le cas échéant de la boite de vitesses (GeT) avant la phase de démarrage.

10. Système d'autorisation au démarrage/fonctionnement selon l'une des revendications 1 à 9,
**caractérisé en ce que**
le moteur du véhicule est coupé automatiquement après enlèvement du transpondeur de la zone de communication dès l'autorisation démarrage/conduite, le véhicule étant à l'arrêt.

11. Système d'autorisation au démarrage/fonctionnement selon l'une des revendications 1 à 10,
**caractérisé en ce qu'**
on surveille en plus le ralenti et on l'intègre dans l'opération de coupure.

12. Système d'autorisation au démarrage/fonctionnement selon l'une des revendications 1 à 11,
**caractérisé en ce qu'**
en l'absence d'opération de démarrage ou si celle-ci n'a pas réussi, il faut répéter la procédure de démarrage y compris une identification du transpondeur par l'actionnement de la pédale de frein (BrP) ou de la pédale d'embrayage.

13. Système d'autorisation au démarrage/fonctionnement selon l'une des revendications 1 à 12,
**caractérisé en ce qu'**
il faut lever les verrous prescrits SE pour la direction et/ou la transmission de force avec le cas échéant la boite de vitesses avant la phase de démarrage.

14. Un système d'autorisation au démarrage/fonctionnement selon l'une des revendications 1 à 13,
**caractérisé en ce que**
le conducteur est informé de la cause du défaut en cas de non-remplissage d'une condition préalable pour la libération du démarrage ou une fausse identité de transpondeur.
